# EUROPEAN PATENT APPLICATION

(11) **EP 2 060 501 A1**
(43) Date of publication of application: **20.05.2009**
(21) Application number: 07806763.4
(22) Date of filing: 05.09.2007
(51) Int. Cl.: B65D 30/16

(54) **LIQUID SUPPLY CONTAINER AND FUEL CELL SYSTEM COMPRISING THE SAME**

(30) Priority: 05.09.2006 JP 2006240766
(71) Applicant: NEC Corporation, Minato-ku Tokyo 108-8001 (JP)
(72) Inventor: KIMURA, Hidekazu, Tokyo 108-8001 (JP); WATANABE, Suguru, Tokyo 108-8001 (JP); TAKAHASHI, Toru, Sagamihara-shi, Kanagawa 229-1131 (JP); KATSUURA, Nobuo, Yokohama-shi, Kanagawa 220-6108 (JP); MURATA, Minoru, Tokyo 103-0002 (JP); ISOBE, Kiyoshi, Tokyo 108-6325 (JP)
(74) Representative: Betten & Resch
(86) International application number: PCT/JP2007/067320
(87) International publication number: WO 2008/029851

(57) **Abstract**

A liquid supply container (1) is provided with: a liquid storage part (10) for accommodating a liquid inside; and a liquid supply part (30) provided on the liquid storage part (10) for supplying the liquid accommodated in the liquid storage part (10) to a liquid receptor (50). Shock-absorbing material is arranged between the liquid storage part (10) and the liquid supply part (30).

## Description

### Technical Field

The present invention relates to a liquid supply container for both storing various liquids such as a liquid fuel used in, for example, a fuel cell and for supplying the stored liquid to a liquid receptor, and to a fuel cell system that is provided with the liquid supply container.

### Background Art

Conventionally, liquid supply containers have been widely used for storing liquids in various apparatuses that use liquid fuel such as a fuel cell system or in the administration of liquid medicines for medical treatment, and further, for supplying the stored liquids to liquid receptors (liquid acceptors) of the various apparatuses. Such liquid supply containers allow the direct exchange of the liquid supply container itself when the liquid that is being supplied runs short and therefore have the advantage of enabling convenient replenishment of the liquid with a high degree of safety and without exposing hands to the liquid. Such liquid supply containers are particularly effective when using liquids that have a potential for adversely affecting the body or liquids that would be seriously degraded by exposure to the air.

Recent years have seen the development of fuel cells for generating electricity that use liquids as a fuel. Development has been particularly active among many electrical manufacturers with regard to direct methanol fuel cells (DMFC) that use methanol as a fuel. Fuel cells are anticipated as next-generation advanced batteries for use in, for example, portable telephones and various other portable electronic apparatuses such as notebook computers. However, methanol typically has a serious adverse affect on the human body and attacks the central nervous system when inhaled, causing dizziness and diarrhea. Methanol is an extremely dangerous and harmful liquid that has a high potential for causing damage to the optic nerve or causing blindness should a large quantity be inhaled or get in the eyes. Therefore, when fuel is to be conveniently and safely supplied to a DMFC by a typical user, a means in which supplying methanol to the device by using a liquid supply container that is a cartridge and that does not require direct handling by the user is considered ideal and is being widely developed (for example, refer to JP-A-2003-308871 and JP-A-08-12301).

This type of liquid supply container must be capable of preventing leakage of the liquid that is held inside the liquid supply container to outside the liquid supply container and preventing damage or failure even when receiving the load of, for example, weight, shocks, or vibrations from the outside that results from, for example, an unexpected accident.

### Disclosure of the Invention

### Problem to be Solved by the Invention

Here, a liquid supply container is normally provided with a liquid storage part and a liquid supply part. The liquid storage part accommodates liquid inside, and the liquid supply part is provided on the liquid storage part and supplies the liquid that is stored in the liquid storage part to a liquid receptor that receives the liquid. The liquid supply part also has the function of a connector for connecting to the liquid receptor.

In a liquid supply container of this configuration, the parts that are comparatively vulnerable to damage or failure due to loads received from the outside are the connecting part between the liquid supply part and the liquid storage part (the part of the liquid supply part that attaches to the liquid storage part) and the liquid storage part itself. In particular, the connection part of the liquid supply part and liquid storage part often involves the connection of heterogeneous parts, whereby the connection part in some cases lacks sufficient connection strength and is therefore considered to be vulnerable to damage or failure resulting in leakage.

The present invention was achieved in view of these circumstances and has as an object the provision of both a liquid supply container that improves resistance to such loads as weight, shock or vibration from the outside and that is therefore safer, and more reliable and a fuel cell system that is provided with this liquid supply container.

### Means for Solving the Problem

To achieve this object, the liquid supply container of the present invention is provided with a liquid storage part for accommodating a liquid inside and a liquid supply part that is provided on the liquid storage part and that supplies liquid that is stored in the liquid storage part to a liquid receptor, and that has shock-absorbing material arranged between the liquid storage part and the liquid supply part.

This liquid supply container is provided with a configuration in which shock-absorbing material is arranged between the liquid storage part and liquid supply part, which is a portion that is comparatively vulnerable to damage or failure from the load of weight, shocks, and vibration received from the outside. As a result, in the event of an unexpected accident such as when the liquid supply container is accidentally dropped or bumped and the liquid supply container is consequently subjected to load from the outside, the shock-absorbing material absorbs the load. The present invention therefore enables an increase in the resistance of the liquid supply container against loads received from the outside.

Further, to achieve the above-described object, the present invention provides a liquid supply container that is provided with: a liquid storage part for accommodating liquid inside; a liquid supply part provided on the liquid storage part for supplying the liquid that is accommodated in the liquid storage part to a liquid receptor; and a liquid supply container casing for accommodating at least a portion of the liquid storage part and at least a portion of the liquid supply part; wherein a shock-absorbing material is provided between the liquid supply part and the liquid supply container casing.

This liquid supply container is provided with a configuration in which shock-absorbing material is arranged between the liquid supply part and the liquid supply container casing, this being the part that is comparatively vulnerable to damage or failure from loads such as weight, shocks, and vibration received from the outside. As a result, in the event of an unexpected accident such as when the liquid supply container is accidentally dropped or bumped, the load that is applied to the liquid supply container from the outside is absorbed by the shock-absorbing material. The present invention therefore enables an improvement in the resistance of the liquid supply container to loads received from the outside.

In the case of this configuration, a configuration can also be adopted in which a shock-absorbing material is further arranged between the liquid storage part and the liquid supply part. By adopting this configuration, in addition to being provided between the in addition to between the liquid supply part and the liquid supply container casing, the shock absorbing material can also be arranged between the liquid storage part and the liquid supply part that is comparatively vulnerable to damage or failure from loads received from the outside, as described hereinabove. Accordingly, the present invention can realize a further improvement in the resistance of the liquid supply container to loads received from the outside.

Further, in the case of this configuration, a configuration can also be adopted in which shock-absorbing material is further arranged between the liquid storage part and the liquid supply container casing. By adopting this configuration, in addition to between the liquid supply part and the liquid supply container casing, the shock absorbing material can also be arranged between the liquid storage part and the liquid supply container casing that is a portion comparatively vulnerable to damage or failure from loads received from the outside as described hereinabove. Accordingly, the present invention can realize an improvement of the resistance of the liquid supply container to loads received from the outside.

The shock-absorbing material may be a material having water absorbency. If the shock-absorbing material is provided with water absorbency, even in the event the liquid that is accommodated inside the liquid storage part leaks to the outside, the shock-absorbing material absorbs this liquid. As a result, leakage of the liquid outside the liquid supply container can be prevented. In addition, the shock-absorbing material may be made up of a shock-absorbing part for absorbing loads from the outside and a water-absorbing part having water absorbency.

Still further, the shock-absorbing material can be made up of a fluid that is present in the space formed between the liquid storage part and the liquid supply container casing. Alternatively, the shock-absorbing material may be ethylene propylene diene monomer (EPDM).

In addition, although no particular restrictions apply to the liquid that is accommodated in the liquid storage part, examples that can be offered include liquid fuels that are used in a fuel cell.

Still further, the present invention provides a fuel cell system that is provided with: a fuel cell, the liquid supply container according to the present invention, liquid fuel that is accommodated in the liquid supply container, and a liquid receptor for receiving the liquid fuel that is supplied from the liquid supply container; and a fuel cell system using the liquid fuel that is supplied to the liquid receptor to generate electricity.

The fuel cell system that is provided with this configuration in which a shock-absorbing material is arranged at a portion of the liquid supply container that is comparatively vulnerable to damage or failure from loads received from the outside. As a result, when a load is applied from the outside to the liquid supply container in the event of an unexpected accident, such as when the liquid supply container is accidentally dropped or bumped, this load can be absorbed by the shock-absorbing material. Essentially, by improving resistance to loads received from the outside of the liquid supply container, the fuel cell system of the present invention allows an improvement of safety and reliability.

### Effect of the Invention

The liquid supply container according to the present invention is provided with a configuration in which the shock-absorbing material is arranged in portions that are comparatively vulnerable to damage or failure from loads imposed by weight, shocks, and vibrations received from the outside. As a result, even when a load is applied from the outside to the liquid supply container in the event of an unexpected accident, such as when the liquid supply container is accidentally dropped or bumped, the load can be absorbed by the shock-absorbing material. As a result, the present invention enables an improvement of the resistance to loads received from the outside and allows an improvement of safety and reliability.

In addition, the fuel cell system according to the present invention is provided with the liquid supply container according to the present invention. As a result, the fuel cell system according to the present invention enables an improvement of resistance to loads received from the outside and consequently has improved safety and reliability.

### Brief Description of the Drawings

FIG. 1 is a perspective view of the liquid supply container according to the first embodiment of the present invention;
FIG. 2 is a side view of the liquid supply container shown in FIG. 1;
FIG. 3 is a perspective view of the liquid supply container shown in FIG. 1 and shows the state in which approximately 80% of the liquid accommodated in the liquid storage part has been used;
FIG. 4 is a sectional view taken along line IV-IV shown in FIG. 2;
FIG. 5 is a schematic view of the fuel cell system provided with the liquid supply container according to the first embodiment of the present invention;
FIG. 6 shows the portion that corresponds to a section taken along line IV-IV shown in FIG. 2 of the liquid supply container according to the second embodiment of the present invention;
FIG. 7 shows a portion that corresponds to a section taken along line IV-IV shown in FIG. 2 of the liquid supply container according to another embodiment of the present invention;
FIG. 8 shows a portion that corresponds to a section taken along line IV-IV shown in FIG. 2 of the liquid supply container according to another embodiment of the present invention;
FIG. 9 shows a portion that corresponds to a section taken along line IV-IV shown in FIG. 2 of the liquid supply container according to another embodiment of the present invention; and
FIG. 10 shows a portion that corresponds to a section taken along line IV-IV shown in FIG. 2 of the liquid supply container according to another embodiment of the present invention.

### Best Mode for Carrying Out the Invention

Explanation next regards the liquid supply container and a fuel cell system provided with this liquid supply container according to preferable embodiments of the present invention with reference to the accompanying figures. The embodiments described hereinbelow are only examples for explaining the present invention and do not in any way limit the present invention. It will be understood by those of ordinary skill in the art that various changes in form and details be made without departing from the sprit and scope of the present invention as defined by the claims.

### First Embodiment

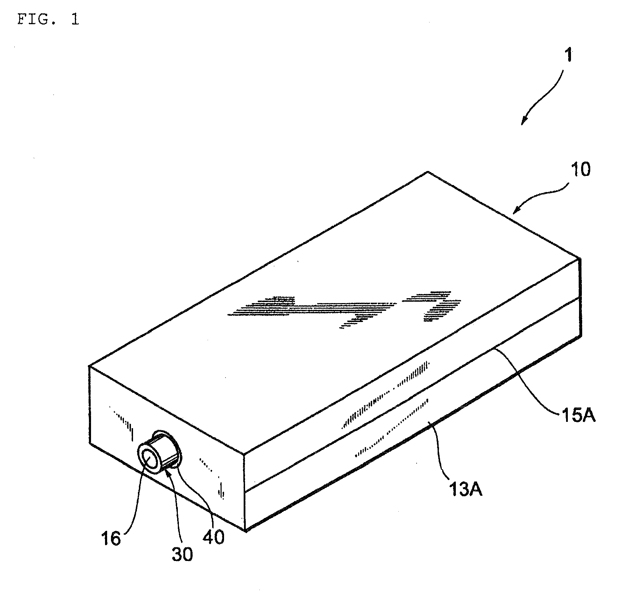

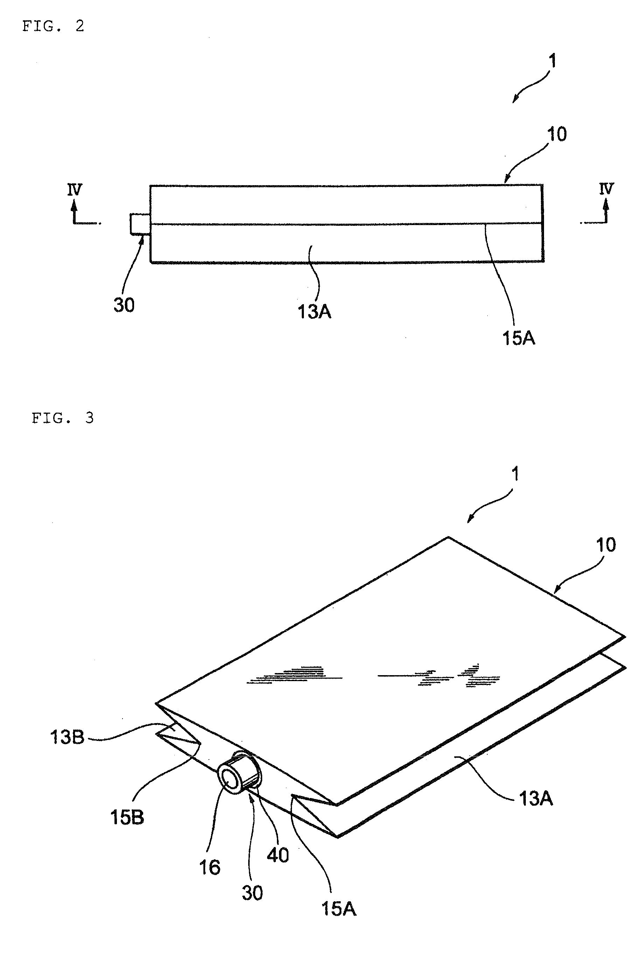

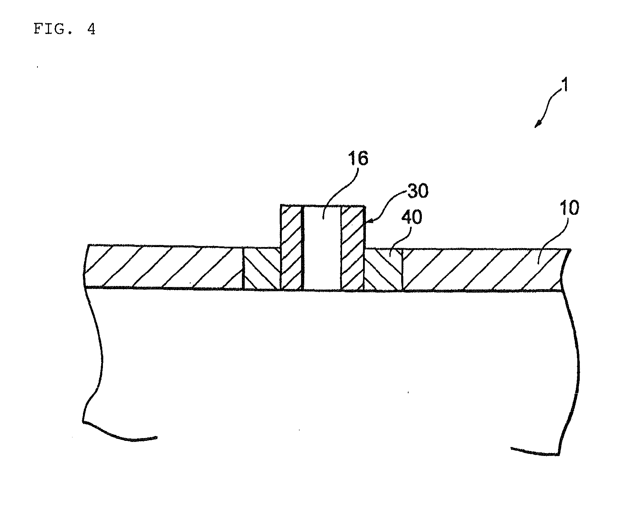

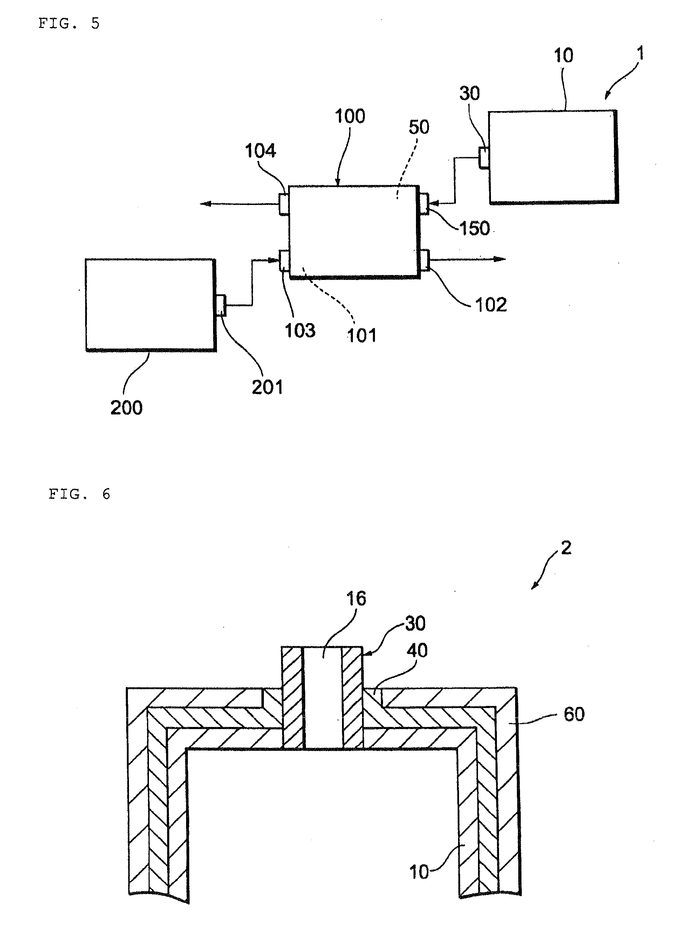

FIG. 1 is a perspective view of the liquid supply container according to the first embodiment of the present invention. FIG. 2 is a side view of the liquid supply container shown in FIG. 1. FIG. 3 is a perspective view of the liquid supply container shown in FIG. 1, and shows the state in which the approximately 80% of the liquid accommodated in the liquid storage part has been used. FIG. 4 is a sectional view taken along line IV-IV shown in FIG. 2. FIG. 5 is a schematic view of the fuel cell system provided with the liquid supply container according to the first embodiment of the present invention.

In the first embodiment, explanation regards an example in which liquid fuel that is used in a fuel cell is accommodated in the liquid storage part of the liquid supply container, and this liquid fuel that is stored is supplied to a liquid receptor of the fuel cell.

As shown in FIGs. 1-5, liquid supply container 1 according to the first embodiment is provided with liquid storage part 10 for holding liquid fuel inside, and liquid supply part 30. Liquid supply part 30 is provided on liquid storage part 10. Liquid supply part 30 supplies the liquid fuel that is held in liquid storage part 10 to liquid receptor 50 of fuel cell 100 that is a separate unit from liquid storage part 10.

Liquid storage part 10 is formed from a substantially rectangular bladder form when liquid fuel is fully filled into it. This liquid storage part 10 includes a pair of side surfaces 13A and 13B arranged on opposite sides. This pair of side surfaces 13A and 13B has a gazette fold-in structure. In other words, side surfaces 13A and 13B are formed to bend in a substantially V-shape toward the inside of liquid storage part 10 with fold lines 15A and 15B that have a gazette fold-in structure as the apices as shown in FIG. 3. By means of this construction, the shape of liquid storage part 10 is deformed, causing side surfaces 13A and 13B to bend in a substantially V shape toward the inside of liquid storage part 10 according to the remaining amount of liquid accommodated inside.

Liquid supply part 30 is formed on a surface of liquid storage part 10 that differs from side surfaces 13A and 13B (one end surface in the lateral direction in the first embodiment). The shape of this liquid supply part 30 is a substantially cylindrical hollow shape. The hollow portion that is open along the axial direction of this cylinder is liquid supply path 16. Liquid supply path 16 is a conduit for supplying liquid fuel that is accommodated inside liquid storage part 10 to liquid receptor 50. Although not shown in the figures, liquid supply path 16 opens when this liquid supply part 30 is connected to liquid receptor 50. However, liquid supply path 16 does not otherwise open, whereby liquid fuel that is held in liquid storage part 10 can be prevented from leaking to the outside when not intended.

In addition, shock-absorbing material 40 is arranged between liquid supply part 30 and liquid storage part 10. This shock-absorbing material 40 is composed of a material capable of absorbing the load of, for example, weight, shocks, and vibrations received from the outside. In the first embodiment, EPDM is used as shock-absorbing material 40. This EPDM, in addition to its function as a shock-absorbing material, has a sealing property and can maintain a watertight seal between liquid supply part 30 and liquid storage part 10.

The portion between liquid storage part 10 and liquid supply part 30 is comparatively vulnerable to damage or failure due to the load of, for example, weight, shocks, and vibrations received from the outside. As a result, in the event of, for example, a mistake during handling in which liquid supply container 1 is dropped or bumped, damage or failure can easily occur at the portion between liquid storage part 10 and liquid supply part 30. However, shock-absorbing material 40 is arranged between liquid storage part 10 and liquid supply part 30 in liquid supply container 1 that is provided in the above-described configuration, and shock-absorbing material 40 absorbs this load, whereby in liquid supply container 1, this enables an improvement in resistance against loads received from the outside, and enables prevention of damage or failure.

Explanation next regards a case in which the liquid supply container according to the first embodiment is applied to a fuel cell system with reference to FIG. 5.

The fuel cell system according to the first embodiment includes: fuel cell 100, liquid supply container 1, and oxygen gas supply source 200. Liquid supply container 1 is connected to inlet 150 of liquid receptor 50 for supplying fuel (liquid fuel in the first embodiment) to the fuel electrode of fuel cell 100. Oxygen gas supply source 200 is connected to inlet 103 of air supply unit 101 for supplying oxygen gas (normally, air) to the air electrode of fuel cell 100. Reference number 102 is the off-gas exhaust port for discharging to the outside the off-gas that is discharged from the fuel electrode of fuel cell 100, and reference number 104 is the off-gas exhaust port for discharging to the outside the off-gas that is discharged from the air electrode of fuel cell 100. In addition, reference number 201 is the oxygen gas discharge port of oxygen gas supply source 200.

Liquid storage part 30 of liquid supply container 1 and inlet 150 of liquid receptor 50 may be connected directly, or may be connected by way of a linking member such as a pipe or tube. In FIG. 5, liquid supply part 30 of liquid supply container 1 and inlet 150 of liquid receptor 50 are shown connected by an arrow for the sake of convenience, and the same is true of oxygen gas discharge port 201 and oxygen gas inlet 103. In addition, oxygen gas supply source 200 may be a storage container such as a container in which oxygen gas is stored, or air may be supplied directly from the atmosphere.

Various types of fuel cells can be used as fuel cell 100. In the first embodiment, DMFC is used as fuel cell 100, and methanol is stored in liquid storage part 10 of liquid supply container 1.

When electricity is generated in a fuel cell system provided with this configuration, the liquid fuel that is held in liquid storage part 10 of liquids supply container 1 is supplied to liquid receptor 50 by way of liquid supply part 30. This liquid fuel is normally drawn by a pump (not shown) that is arranged in the fuel cell system and supplied to liquid receptor 50 from liquid storage part 10. Fuel cell 100 then generates electricity by bringing about a electrochemical reaction between hydrogen or hydrogen ions that are extracted from the liquid fuel that was supplied from liquid receptor 50 and oxygen that was supplied from oxygen gas supply source 200 (or air taken in directly from the atmosphere).

A case has been described in the first embodiment in which liquid storage part 10 is configured from a bladder having a substantially a rectangular, parallelepiped shape when liquid storage part 10 is filled with liquid fuel and that folds as shown in FIG. 3 as the liquid fuel is consumed. However, liquid storage part 10 is not limited to this form and of course can include other forms as long as it is capable of both holding liquid inside and supplying the liquid that it is holding to liquid receptor 50 by way of liquid supply part 30. In addition, liquid storage part 10 is obviously made of a material having resistance to the liquid that is held, but the size or thickness of the container (a bladder in the case of the first embodiment) that forms liquid storage part 10 can be freely determined.

Still further, although a case has been explained in the first embodiment in which liquid fuel used in fuel cell 100 is accommodated in liquid storage part 10, the liquid held in liquid storage part 10 is not limited to this form and can be freely selected as desired.

### Second Embodiment

Explanation next regards the liquid supply container according to the second embodiment of the present invention with reference to the accompanying drawings. In the second embodiment, parts that are identical to parts described in the first embodiment are given the same reference numbers and detailed explanation of such parts will be omitted.

FIG. 6 shows a portion that corresponds to a section taken along line IV-IV shown in FIG. 2 of the liquid supply container according to the second embodiment of the present invention. As shown in FIG. 6, the points of difference between liquid supply container 2 according to the second embodiment and liquid supply container 1 according to the first embodiment are that liquid storage part 10 is accommodated in liquid supply container casing 60 and that shock-absorbing material 40 is arranged between liquid storage part 10 and liquid supply container casing 60.

In other words, liquid supply container 2 is provided with liquid storage part 10, liquid supply part 30, and liquid supply container casing 60. Liquid supply part 30 is provided on liquid storage part 10. This liquid supply part 30 supplies the liquid that is accommodated in liquid storage part 10 to liquid receptor 50. Liquid supply container casing 60 accommodates a portion of liquid supply part 30 and liquid storage part 10. Shock-absorbing material 40 is then provided between liquid storage part 10 and liquid supply container casing 60 and between liquid supply part 30 and liquid supply container casing 60.

Liquid supply container 2 that is provided with this configuration can absorb a load received from the outside by means of shock-absorbing material 40, as in the first embodiment. Here, liquid supply container 2 can provide a further improvement of the resistance to loads received from the outside compared to liquid supply container 1 according to the first embodiment because the region in which shock-absorbing material 40 is arranged extends over the entire surface of liquid storage part 10.

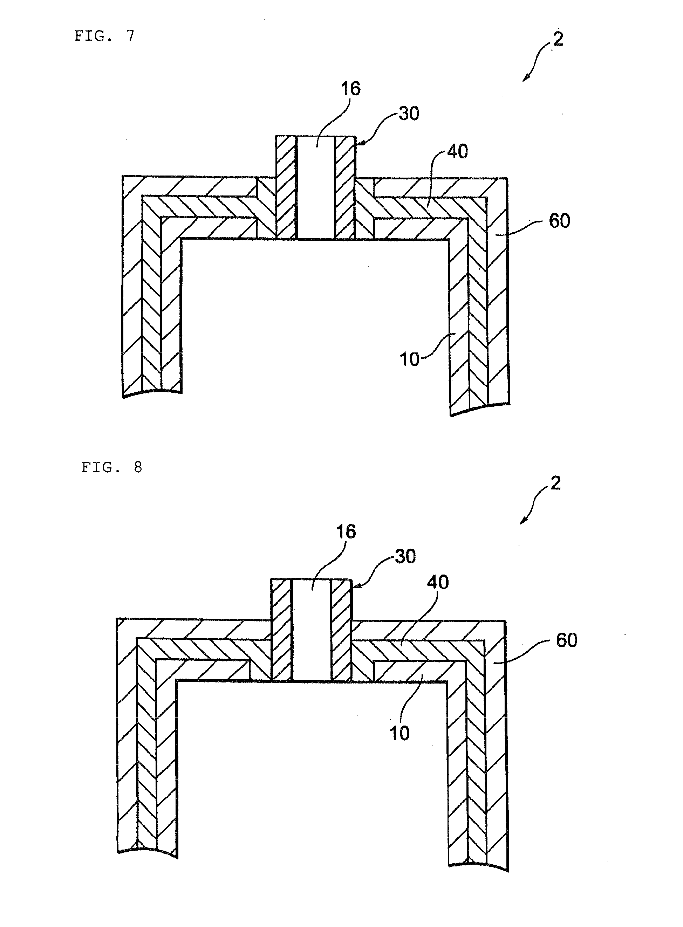

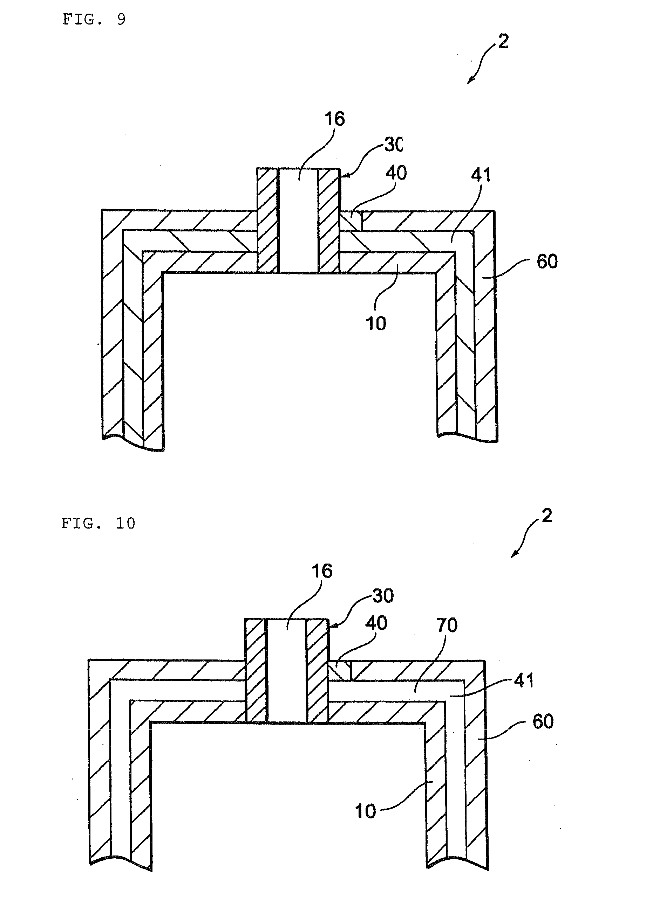

In addition, although a case was described in the second embodiment in which shock-absorbing material 40 is arranged between liquid storage part 10 and liquid supply container casing 60 and between liquid supply part 30 and liquid supply container casing 60, the present invention is not limited to this form, and as shown in FIG. 7, shock-absorbing material 40 may also be arranged between liquid storage part 10 and liquid supply container casing 60, between liquid supply part 30 and liquid supply container casing 60, and between liquid storage part 10 and liquid supply part 30. In addition, as shown in FIG. 8, shock-absorbing material 40 may also be arranged between liquid storage part 10 and liquid supply container casing 60 and between liquid storage part 10 and liquid supply part 30. Still further, as shown in FIG. 9, shock-absorbing material 41 that is made of a different material than shock-absorbing material 40 may also be arranged between liquid storage part 10 and liquid supply container casing 60.

Still further, although a configuration in which liquid storage part 10 and a portion of liquid supply part 30 were accommodated was used as liquid supply container casing 60 in the second embodiment, liquid supply container casing 60 is not limited to this form and may also be of a configuration that accommodates (envelopes) at least a portion of liquid storage part 10. In this case, as in the first embodiment, shock-absorbing material 40 may be separately arranged between liquid supply part 30 and liquid storage part 10.

Although cases were described in the first and second embodiments in which EPDM was used as shock-absorbing material 40, no particular restrictions apply to shock-absorbing material 40 as long as this material is capable of absorbing the load of weight, shocks, and vibrations received from the outside. For example, a material such as a rubber, elastomer, or gel may also be applied as shock-absorbing material 40.

What is applied to shock-absorbing material 40 is also the same as what is applied to shock-absorbing material 41. Examples of the above-described rubber include EPDM, natural rubber, and butyl rubber. In addition, examples of the above-described elastomer include olefin, urethane, and styrene. Examples of the above-described gel include silicone, hydrocarbons, acrylics, and urethane. Alternatively, a member such as sponge, felt, or fabric can also be substituted as long as it has a structure that prevents contact with the liquid accommodated in liquid storage part 10 as shown in FIG. 6 or FIG. 9.

Still further, shock-absorbing material 40 can be composed from a material that has water absorbency and that also absorbs the load of weight, shocks, and vibrations received from the outside. An example of such a material is a hydrocarbon gel material.

Still further, shock-absorbing material 40 may be made up from a shock-absorbing part for absorbing a load from the outside and a water-absorbing part that has water absorbency. In this case, shock-absorbing material 40 may have a multilayered structure of a shock-absorbing part (such as a shock-absorbing film) and a water-absorbing part (such as a water-absorbing film) or may have a mixture of a shock-absorbing part and a water-absorbing part.

Still further, when liquid supply container 2 includes liquid supply container casing 60, as in the second embodiment, space 70 (gap) may be formed between liquid storage part 10 and liquid supply container casing 60, as shown in FIG. 10, air or a desired fluid introduced into this space 70, and this fluid then used as shock-absorbing material 41.

## Claims

1. A liquid supply container comprising:
a liquid storage part for accommodating a liquid inside; and
a liquid supply part that is provided on said liquid storage part for supplying a liquid that is stored in said liquid storage part to a liquid receptor;
wherein a shock-absorbing material is arranged between said liquid storage part and said liquid supply part.

2. A liquid supply container comprising:
a liquid storage part for accommodating liquid inside;
a liquid supply part provided on said liquid storage part for supplying a liquid that is accommodated in said liquid storage part to a liquid receptor; and
a liquid supply container casing for accommodating at least a portion of said liquid storage part and at least a portion of said liquid supply part;
wherein a shock-absorbing material is provided between said liquid storage part and said liquid supply container casing.

3. The liquid supply container according to claim 2, wherein a shock-absorbing material is further arranged between said liquid storage part and said liquid supply part.

4. The liquid supply container according to claim 2 or claim 3,
wherein a shock-absorbing material is further arranged between said liquid storage part and said liquid supply container casing.

5. The liquid supply container according to any one of claims 1 to 4,
wherein said shock-absorbing material has water absorbency.

6. The liquid supply container according to any one of claims 1 to 4,
wherein said shock-absorbing material includes a shock-absorbing part for absorbing load from the outside and a water-absorbing part having water absorbency.

7. The liquid supply container according to claim 4, wherein said shock-absorbing material is composed of a fluid existing in a space formed between said liquid storage part and said liquid supply container casing.

8. The liquid supply container according to any one of claims 1 to 6,
wherein said shock-absorbing material is composed of an ethylene propylene diene monomer (EPDM).

9. The liquid supply container according to any one of claims 1 to 8,
wherein said liquid is a liquid fuel used in a fuel cell.

10. A fuel cell system provided with:
a fuel cell;
a liquid supply container according to any one of claims 1 to 9,
a liquid fuel that is accommodated in said liquid supply container; and
a liquid receptor for receiving liquid fuel that is supplied from said liquid supply container;
wherein said fuel cell system uses liquid fuel supplied to said liquid receptor to generate electricity.
